**Europäisches Patentamt**

**European Patent Office**

**Office européen des brevets**

(11) Numéro de publication : **0 352 213 B1**

# (12) FASCICULE DE BREVET EUROPEEN

(45) Date de publication du fascicule du brevet :
**03.06.92 Bulletin 92/23**

(51) Int. Cl.$^5$ : **C02F 1/48**

(21) Numéro de dépôt : **89630114.0**

(22) Date de dépôt : **13.07.89**

(54) **Elément conditionneur de liquide.**

(30) Priorité : **22.07.88 LU 87289**

(43) Date de publication de la demande :
**24.01.90 Bulletin 90/04**

(45) Mention de la délivrance du brevet :
**03.06.92 Bulletin 92/23**

(84) Etats contractants désignés :
**AT BE CH DE ES FR GB GR IT LI NL SE**

(56) Documents cités :
**EP-A- 0 277 524**
**DE-A- 3 618 174**

(73) Titulaire : **LIQUITECH HOLDING S.A.**
**11, rue Aldringen**
**L-2960 Luxembourg (LU)**

(72) Inventeur : **L'Inventeur a renoncé à sa désignation**

(74) Mandataire : **Waxweiler, Jean et al**
**OFFICE DENNEMEYER S.à.r.l. P.O. Box 1502**
**L-1015 Luxembourg (LU)**

## Description

La présente invention a pour objet un élément conditionneur de liquide à effet magnétique antitartre.

Des appareils conditionneurs d'eau à effet magnétique antitartre sont connus en soi et comportent, le plus généralement, un empilage d'aimants annulaires logés dans une monture que traverse longitudinalement le flux d'eau à traiter.

Bien que le mécanisme exact de fonctionnement de tels dispositifs n'ait pas été expliqué de façon parfaitement satisfaisante jusqu'à présent , leur efficacité est admise, le controle de celle-ci par la mesure de l'entartrage des conduites, avec ou sans appareil conditionneur, et la comparaison étant aisés.

En fait, il semble que ces appareils agissent surtout sur le calcium et le magnésium pour empêcher qu'ils ne précipitent sous forme incrustante contre les parois des conduites mais pour qu'ils précipitent sous forme pulvérulente, la poudre ainsi formée étant éliminée par le flux de l'eau traitée.

Le but de la présente invention est d'améliorer les performances de tels appareils par une disposition nouvelle des éléments magnétiques de ceux-ci.

Ce but est atteint grâce aux moyens définis dans la revendication 1.

Le dessin représente, à titre d'exemple, une forme d'exécution de l'objet de l'invention et une variante.

La fig. 1 est une coupe longitudinale d'un élément conditionneur d'eau monté sur une conduite.

La fig. 2 est une coupe suivant la ligne II-II de la fig. 1.

La fig. 3 est une vue en perspective, schématique, d'une partie d'un élément conditionneur du genre de celui des figs. 1 et 2, et

La fig. 4 est une coupe d'un appareil de filtration d'eau combiné avec le présent élément conditionneur.

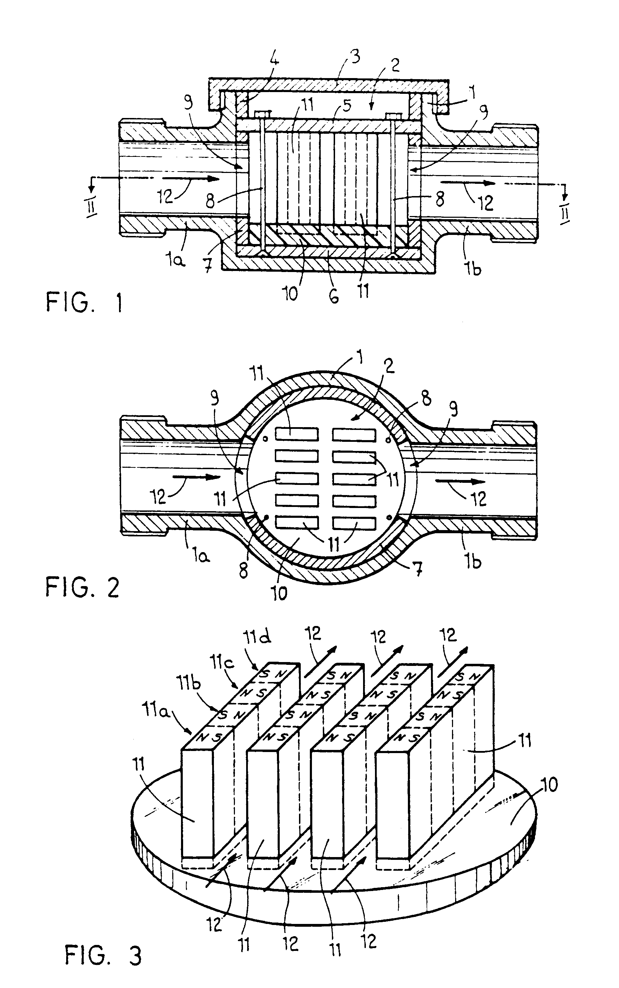

L'appareil conditionneur représenté aux figs. 1 et 2 comprend un corps 1, muni d'une tubulure 1a d'entrée de l'eau à traiter et d'une tubulure 1b de sortie, dans lequel se loge une cartouche 2 maintenue en place par un couvercle 3 se vissant sur le corps 1, avec interposition d'une bague 4 formant entretoise.

La cartouche 2 constitue l'élément conditionneur à effet magnétique antitartre. Elle comprend un bâti en forme de cage constitué par deux platines circulaires 5 et 6, en matière non magnétique, maintenues à distance l'une de l'autre par une entretoise cylindrique 7 et assemblées par des tirants 8. Cette entretoise 7 présente deux ouvertures 9, circulaires, situées en regard des deux tubulures 1a et 1b, respectivement. Une plaque de base 10, également en matière non magnétique, par exemple en matière plastique, repose sur la platine inférieure 6 du bâti.

Des plaquettes magnétiques 11 réalisées par exemple en une terre rare au cobalt samarium, fichées dans la plaque de base 10, forment deux rangées dans chacune desquelles elles sont disposées parallèlement les unes aux autres et parallèlement au flux de l'eau circulant dans l'appareil, indiqué par les fléches 12 des figs. 1 et 2. La distance séparant les plaquettes 11 les unes des autres correspond sensiblement à l'épaisseur de celles-ci.

Ces plaquettes, représentées en détail à la fig. 3, sont aimantées dans une direction perpendiculaire à leur plan. De plus, elles sont divisées en zones ou bandes successives, désignées par 11a, 11b, 11c et 11d dans chacune desquelles la polarité de l'aimantation est inversée. C'est ainsi que, dans la zone 11a, le nord est situé à gauche de la fig. 3 et le sud à droite, alors que, dans la zone 11b, le sud est à gauche et le nord à droite, la zone 11c étant la même que la zone 11a et la zone 11d la même que la zone 11b.

Toutes ces plaquettes sont identiques de sorte que chaque zone d'une plaquette est située en regard d'une zone identiquement polarisée des plaquettes voisines.

L'expérience a montré que cette disposition particulière des plaquettes améliore hautement l'efficacité de l'appareil dont l'effet antitartre réduit considérablement l'entartrage des conduites et, partant, leur corrosion.

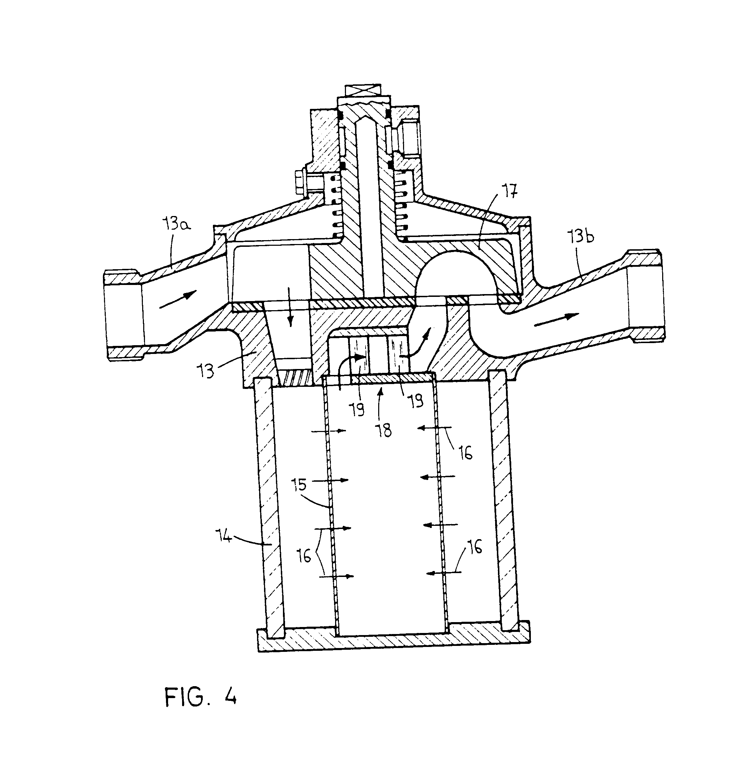

Dans la variante de la fig. 4, le conduit dans lequel est disposé l'élément antitartre est un filtre à eau, quine sera pas décrit ici en détail, qui comporte un corps 13 muni d'une tubulure d'admission 13a et d'une tubulure de sortie 13b, sous lequel est fixée une pièce cylindrique 14 à l'intérieur de laquelle est disposé un filtre cylindrique 15 dans lequel l'eau pénètre radialement comme indiqué par les fléches 16.

Le corps 13 contient un boisseau mobile 17 dont le rôle ne sera pas décrit ici en détail, étant étranger à l'invention, mais qui permet, suivant la position qu'il occupe, soit le passage normal de l'eau passant de la tubulure d'admission 13a à la tubulure de sortie 13b en traversant le filtre cylindrique 15, position représentée au dessin, soit une position d'inversion dans laquelle l'eau est envoyée à contre courant, traversant le filtre 15 de l'intérieur vers l'extérieur, afin de décolmater celui-ci.

L'extrémité de sortie du filtre 15 est munie d'une cartouche antitartre 18 comprenant des plaquettes aimantées 19, formant deux rangées, identiques à celles représentées en détail à la fig. 3, parallèles les unes aux autres et parallèles au flux de l'eau qui quitte l'appareil.

Ainsi l'appareil assure à la fois la filtration de l'eau et son conditionnement antitartre.

Il est à noter que, dans l'élément objet de la présente invention, le nombre des rangées de plaquettes de même que le nombre des plaquettes par rangée pourra être différent de ce qu'ils sont dans l'exemple et la variante représentés.

De même, l'élément pourra servir à traiter des liquides autres que de l'eau, tel le vin, le lait ou autre, par exemple.

Enfin, il est également à remarquer que les plaquettes pourront être réalisées d'une seule pièce ou faites en plusieurs éléments juxtaposés dont chacun représentera une zone polarisée de la plaquette.

## Revendications

1. Elément conditionneur de liquide à effet magnétique antitartre, caractérisé par le fait qu'il comprend, se montant sur un conduit contenant un liquide susceptible de l'entartrer, au moins une série de plaquettes aimantées disposées parallèlement les unes aux autres et parallèlement à la direction du flux du liquide à traiter, chacune de ces plaquettes comprenant plusieurs zones aimantées de telle manière que le flux magnétique soit perpendiculaire à leur plan et de sens alterné d'une zone à l'autre, chaque zone d'une plaquette étant située en regard d'une zone identiquement polarisée des plaquettes voisines.

2. Elément suivant la revendication 1, caractérisé par le fait qu'il comprend plusieurs rangées de plaquettes se succédant dans le sens du flux du liquide à traiter.

3. Elément suivant la revendication 1, caractérisé par le fait que lesdites plaquettes sont montées sur un bâti et constituent avec ce dernier une cartouche se montant comme un tout dans le conduit traversé par le liquide à traiter.

4. Elément suivant la revendication 1, caractérisé par le fait que lesdites plaquettes sont situées dans un appareil de filtration de liquide.

5. Elément suivant la revendication 4, caractérisé par le fait que les plaquettes sont situées à l'extrémité de sortie d'un filtre cylindrique dans lequel le liquide pénètre radialement.

## Patentansprüche

1. Flüssigkeitskondionierelement mit magnetischem Kesselsteinverhütungseffekt, dadurch gekennzeichnet, daß es, befestigt in einer Leitung, die eine Flüssigkeit enthält, welche zur Kesselsteinablagerung neigt, wenigstens eine Reihe von magnetisierten Plättchen aufweist, die parallel zueinander und parallel zu der Richtung des Stroms der zu behandelnden Flüssigkeit angeordnet sind, wobei jedes dieser Plättchen mehrere Zonen aufweist, die derart magnetisiert sind, daß der Magnetfluß rechwinkelig zu ihrer Ebene ist und in der Richtung von einer Zone zur anderen abwechselt, wobei sich jede Zone eines Plättchens gegenüber einer identisch polarisierten Zone der benachbarten Plättchen befindet.

2. Element nach Anspruch 1, dadurch gekennzeichnet, daß es mehrere Reihen von Plättchen aufweist, die in der Richtung des Stroms der zu behandelnden Flüssigkeit aufeinanderfolgen.

3. Element nach Anspruch 1, dadurch gekennzeichnet, daß die Plättchen auf einem Rahmen befestigt sind und mit diesem eine Kartusche bilden, die wie ein Stück in der von der zu behandelnden Flüssigkeit durchströmten Leitung befestigt ist.

4. Element nach Anspruch 1, dadurch gekennzeichnet, daß die Plättchen in einer Flüssigkeitsfiltriervorrichtung angeordnet sind.

5. Element nach Anspruch 4, dadurch gekennzeichnet, daß die Plättchen am Ausgangsende eines zylindrischen Filters angeordnet sind, in den die Flüssigkeit radial eindringt.

## Claims

1. Liquid conditioning element with magnetic antifurring effect, characterised in that, mounted on a conduit containing a liquid susceptible to furring, it comprises at least one series of magnetised plates arranged parallel to one another and parallel to the direction of flow of the liquid to be treated, each of these plates comprising several zones magnetised in such a way that the magnetic flux is perpendicular to their plane and alternates in direction from one zone to another, each zone of a plate facing an identically polarised zone of adjacent plates.

2. Element according to Claim 1 characterised in that it comprises several rows of plates following each other in the direction of flow of the liquid to be treated.

3. Element according to Claim 1 characterised in that the said plates are mounted on a structure and, together with the latter, constitute a cartridge mounted as a unit in the conduit traversed by the liquid to be treated.

4. Element according to Claim 1 characterised in that the said plates are located in a liquid filtration device.

5. Element according to Claim 4 characterised in that the plates are located at the outlet end of a cylindrical filter which the water enters radially.

FIG. 4